# EUROPEAN PATENT APPLICATION

(11) **EP 4 755 950 A1**
(43) Date of publication of application: **10.06.2026**
(21) Application number: 24849282.9
(22) Date of filing: 02.08.2024
(51) Int. Cl.: C08G 83/00, C08L 101/00

(54) **DEGRADABLE COMPOUND**

(30) Priority: 02.08.2023 JP 2023126330
(71) Applicant: NAGASE CHEMTEX CORPORATION, Osaka-shi, Osaka 550-8668 (JP)
(72) Inventor: KURUSHIMA, Yasunori, Tatsuno-shi, Hyogo 679-4124 (JP)
(74) Representative: Klöckner, Christoph
(86) International application number: PCT/JP2024/027650
(87) International publication number: WO 2025/028637

(57) **Abstract**

The present invention aims to provide a degradable compound that has high solvent solubility and is less likely to cause precipitation. The present invention relates to a degradable compound represented by the following formula (1). In formula (1), n ≥ 0, k ≥ 0, m ≥ 0, p1 ≥ 1, p2 ≥ 1, and p3 ≥ 1; R¹, R², and R³ each independently represent a hydrocarbon group, a group containing a siloxane structure, or a single bond; Z¹ and Z² each independently represent a hydrocarbon group or a group containing a siloxane structure; at least one selected from the group consisting of R¹, R², and R³ and/or at least one selected from the group consisting of Z¹ and Z² has a molecular weight of 200 or more; Q¹, Q², and Q³ each independently represent a reactive functional group, a hydrogen atom, or a halogen atom; and A¹ to A⁸ each independently represent a carbonyl group or a single bond, at least one of A¹ and A² is a carbonyl group, at least one of A³ and A⁴ is a carbonyl group, at least one of A⁵ and A⁶ is a carbonyl group, and at least one of A⁷ and A⁸ is a carbonyl group.

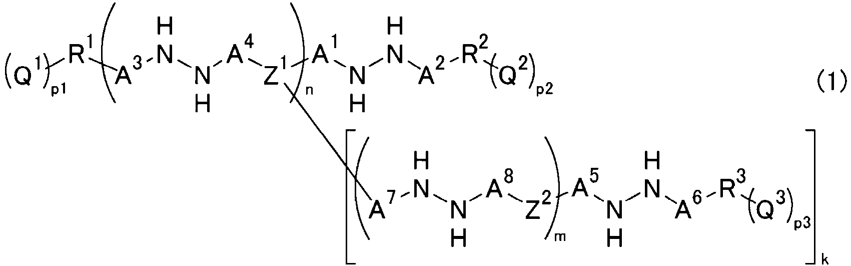

## Description

### TECHNICAL FIELD

The present invention relates to a degradable compound.

### BACKGROUND ART

Plastic products are utilized across diverse fields, including daily necessities, automobiles, and electronic devices, owing to their formability, durability, and lightweight properties. However, they present the problem of poor degradability after disposal. In recent years, degradable polymers, which are easily degradable, have been developed for global environmental protection.

Patent Literatures 1 to 3 disclose polymers having a diacylhydrazine structure as degradable polymers. These polymers are stable in the air due to the presence of the diacylhydrazine structure, while they are rapidly degraded when reacted with oxidizing agents such as sodium hypochlorite.

### CITATION LIST

### - Patent Literature

Patent Literature 1: JP 2011-236381 A
Patent Literature 2: WO 2021/131003
Patent Literature 3: JP 2011-052075 A

### SUMMARY OF INVENTION

### - Technical Problem

When the polymers having a diacylhydrazine structure described in Patent Literatures 1, 2, and 3 are used to produce cured products, these polymers are poorly soluble in solvents and therefore are likely to cause precipitation of crystals before curing, which may result in curing defects in some cases. Moreover, even those with relatively high solvent solubility are only soluble in high-boiling-point aprotic polar solvents or strong acids, and therefore a large amount of energy is required in the step of removing the solvent to obtain a formed product. This causes the problem of significant environmental loads.

The present invention aims to provide a degradable compound that has high solvent solubility and is less likely to cause precipitation.

### - Solution to Problem

The present inventor has found that a hydrazine derivative containing a specific structure can exhibit increased solvent solubility and suppress precipitation. Based on this finding, the present invention has been completed.

Specifically, the present invention relates to a degradable compound, represented by the following formula (1): 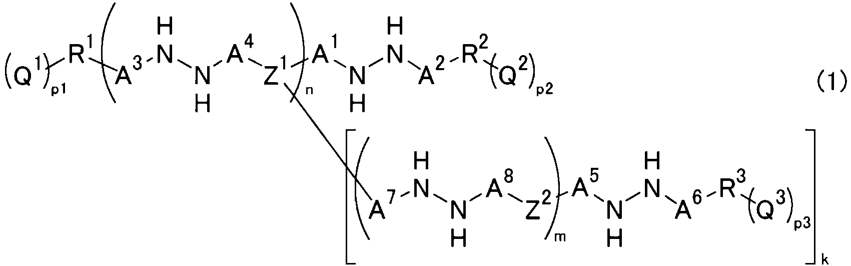 wherein
- n ≥ 0, k ≥ 0, m ≥ 0, p1 ≥ 1, p2 ≥ 1, and p3 ≥ 1;
- R¹, R², and R³ each independently represent a hydrocarbon group, a group containing a siloxane structure, or a single bond;
- Z¹ and Z² each independently represent a hydrocarbon group or a group containing a siloxane structure;
- at least one selected from the group consisting of R¹, R², and R³, at least one selected from the group consisting of Z¹ and Z², or both, has a molecular weight of 200 or more;
- Q¹, Q², and Q³ each independently represent a reactive functional group, a hydrogen atom, or a halogen atom; and
- A¹ to A⁸ each independently represent a carbonyl group or a single bond, at least one of A¹ and A² is a carbonyl group, at least one of A³ and A⁴ is a carbonyl group, at least one of A⁵ and A⁶ is a carbonyl group, and at least one of A⁷ and A⁸ is a carbonyl group.

Preferably, the degradable compound is degradable upon contact with an oxidizing agent.

Preferably, in the degradable compound, Z¹ or Z² has a molecular weight of 700 or more.

Preferably, in the degradable compound, n ≥ 1 and k ≥ 1.

Preferably, in the degradable compound, n ≥ 1 and k ≥ 1, and Z¹ has a molecular weight of 200 or more.

The present invention also relates to a method for degrading a degradable compound, including
bringing the degradable compound into contact with an aqueous solution containing an oxidizing agent at 100°C or lower.

The present invention also relates to a degradable cross-linking agent, including the degradable compound,
wherein Q¹, Q², and Q³ are each independently at least one reactive functional group selected from the group consisting of a hydroxyl group, an amino group, a thiol group, a hydrazide group, a carboxylic acid, an acid anhydride group, a vinyl group, an allyl group, an acrylate group, a methacrylate group, a crotonate group, an isoprenyl group, an acrylamide group, a methacrylamide group, a crotonamide group, an epoxy group, an oxetane group, an oxazoline group, an isocyanate group, a carbodiimide group, a methylol group, a silanol group, a hydroxysilyl group, and an alkoxysilyl group.

Preferably, in the degradable cross-linking agent, Q¹ and Q² are the same reactive functional group, or Q¹ and Q³ are the same reactive functional group.

Preferably, in the degradable cross-linking agent, p1 = 1, p2 = 1, or p3 = 1.

Preferably, the degradable cross-linking agent is liquid at 30°C to 60°C.

The present invention also relates to a composition, containing:
the degradable cross-linking agent; and
at least one selected from the group consisting of a curable resin, a polymerization initiator, and a solvent.

The present invention also relates to a degradable cross-linked product, formed from the composition.

Preferably, the degradable cross-linked product is degradable upon contact with an oxidizing agent.

The present invention also relates to a method for degrading a degradable cross-linked product, including
bringing the degradable cross-linked product into contact with an aqueous solution containing an oxidizing agent at 100°C or lower.

### - Advantageous Effects of Invention

The degradable compound of the present invention has high solvent solubility and is less likely to cause precipitation.

### DESCRIPTION OF EMBODIMENTS

### <<Degradable compound>>

The degradable compound of the present invention is represented by the following formula (1):

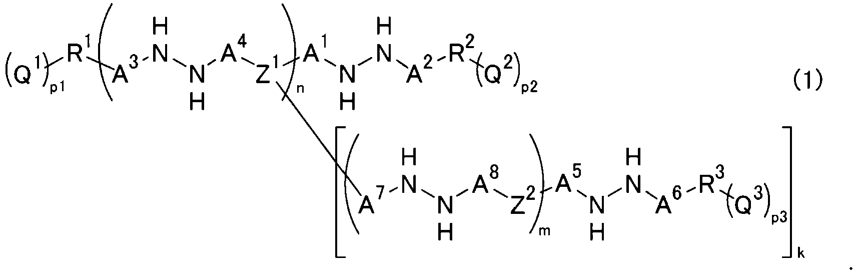

In formula (1), n, k, m, p1, p2, p3, R¹, R², R³, Z¹, Z², Q¹, Q², and Q³ are as follows:
- n ≥ 0, k ≥ 0, m ≥ 0, p1 ≥ 1, p2 ≥ 1, and p3 ≥ 1;
- R¹, R², and R³ each independently represent a hydrocarbon group, a group containing a siloxane structure, or a single bond;
- Z¹ and Z² each independently represent a hydrocarbon group or a group containing a siloxane structure;
- at least one selected from the group consisting of R¹, R², and R³ and/or at least one selected from the group consisting of Z¹ and Z² has a molecular weight of 200 or more;
- Q¹, Q², and Q³ each independently represent a reactive functional group, a hydrogen atom, or a halogen atom; and
- A¹ to A⁸ each independently represent a carbonyl group or a single bond, at least one of A¹ and A² is a carbonyl group, at least one of A³ and A⁴ is a carbonyl group, at least one of A⁵ and A⁶ is a carbonyl group, and at least one of A⁷ and A⁸ is a carbonyl group.

### <n, m, and k in formula (1)>

In formula (1), n and m both represent 0 or more and are each independently preferably 1 or more, more preferably 2 or more. When n is 1 or more, the degradability can be enhanced due to the presence of two or more hydrazine-derived structures (-A-NH-NH-A-). The upper limits of n and m may each be, but not limited to, 50 or less.

In formula (1), k is 0 or more, preferably 1 or more, more preferably 2 or more. When k is 1 or more, the degradable compound of the present invention can be used as a cross-linking agent to perform three-dimensional cross-linking. The upper limit of k may be, but not limited to, 50 or less.

### <R¹, R², and R³ in formula (1)>

R¹, R², and R³ each independently represent a hydrocarbon group, a group containing a siloxane structure, or a single bond.

The siloxane structure-containing group is preferably a divalent or higher-valent group. The siloxane structure-containing group contains a -Si-O- bond as the main backbone and may have a linear, branched, or cyclic structure. The number of silicon atoms in the siloxane structure-containing group is preferably 2 to 300, more preferably 4 to 100, still more preferably 10 to 80.

The hydrogen atom bonded to the silicon atom may be substituted. Specific examples of such a substituent include an alkyl group, an alkoxy group, a phenoxy group, a halogen atom, an amino group, a sulfo group, a cyano group, and a nitro group.

Specific examples of the siloxane structure-containing group include dimethyl silicone, diethyl silicone, ethyl methyl silicone, and polymethylsilsesquioxane, as well as modified silicones obtained by modifying a hydrocarbon group at the terminal and/or side chain of any of the foregoing groups to incorporate a heteroatom such as N, S, O, or P.

When R¹, R², and R³ are each a hydrocarbon group, the number of carbon atoms thereof is preferably 1 to 600, more preferably 10 to 400, still more preferably 20 to 300, in order to control the degradation rate and solvent solubility. The hydrocarbon group is a saturated or unsaturated hydrocarbon group and may have a linear, branched, or cyclic structure.

The hydrocarbon group may have a substituent. Specific examples of the substituent include an alkoxy group, a phenoxy group, a halogen atom, an amino group, a sulfo group, a cyano group, and a nitro group.

The hydrocarbon group may contain a heteroatom. When a heteroatom is present, the number thereof is preferably 1 to 300. The heteroatom may be present on the main chain or side chain of the hydrocarbon group. Examples of the heteroatom include N, S, O, and P. Examples of a heteroatom-containing structure in the hydrocarbon group include: 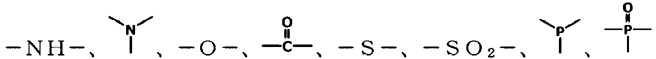 Moreover, the hydrocarbon group may not contain a heteroatom.

Specific examples of the hydrocarbon group include linear hydrocarbons such as methylene, ethylene, propylene, butylene, pentylene, hexylene, heptylene, octylene, nonylene, ethers, urethanes, ureas, esters, thioethers, carbonates, and amides; branched hydrocarbons such as isopropylene, isobutylene, 2,2-dimethylpropylene, and 2-ethyl-2-methylpropylene; cyclic hydrocarbons such as cyclohexylene, cyclopentylene, norbornenylene, phenylene, and naphthylene; and PEG chains, as well as trivalent or tetravalent groups corresponding to the foregoing groups. The hydrogen atoms in these hydrocarbon groups may be replaced by any of the substituents mentioned above.

### <Z¹ and Z² in formula (1)>

In formula (1), Z¹ and Z² each independently represent a hydrocarbon group or a group containing a siloxane structure.

The siloxane structure-containing group is a divalent or higher-valent group. The siloxane structure-containing group contains a -Si-O- bond as the main backbone and may have a linear, branched, or cyclic structure. The number of silicon atoms in the siloxane structure-containing group is preferably 2 to 300, more preferably 4 to 100, still more preferably 10 to 80.

The hydrogen atom bonded to the silicon atom may be substituted. Specific examples of such a substituent include an alkyl group, an alkoxy group, a phenoxy group, a halogen atom, an amino group, a sulfo group, a cyano group, and a nitro group.

Specific examples of the siloxane structure-containing group include dimethyl silicone, diethyl silicone, ethyl methyl silicone, and polymethylsilsesquioxane, as well as modified silicones obtained by modifying a hydrocarbon group at the terminal and/or side chain of any of the foregoing groups to incorporate a heteroatom such as N, S, O, or P.

When Z¹ and Z² are each a hydrocarbon group, the number of carbon atoms thereof is preferably 1 to 700, more preferably 15 to 500, still more preferably 50 to 400, in order to control the degradation rate and solvent solubility. The hydrocarbon group has a saturated or unsaturated hydrocarbon group as the main backbone and may have a linear, branched, or cyclic structure.

The hydrocarbon group may have a substituent. Specific examples of the substituent include an alkoxy group, a phenoxy group, a halogen atom, an amino group, a sulfo group, a cyano group, and a nitro group.

The hydrocarbon group may contain a heteroatom such as N, S, O, or P. When a heteroatom is present, the number thereof is preferably 1 to 350. The heteroatom may be present on the main chain or side chain of the hydrocarbon group. Examples of a heteroatom-containing structure in the hydrocarbon group include: 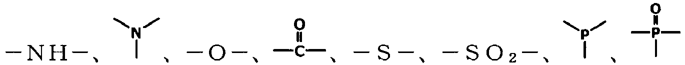 Moreover, the hydrocarbon group may not contain a heteroatom.

The hydrocarbon group may contain a reactive functional group. Examples of the reactive functional group include a hydroxyl group, an amino group, a hydrazide group, a thiol group, an isoprenyl group, a crotonamide group, a crotonate group, a carboxylic acid, an acid anhydride group, a vinyl group, an allyl group, an acrylate group, a methacrylate group, an acrylamide group, a methacrylamide group, a hydroxysilyl group, an epoxy group, an oxetane group, an oxazoline group, an isocyanate group, a carbodiimide group, a methylol group, a silanol group, and an alkoxysilyl group.

Specific examples of the hydrocarbon group include linear hydrocarbons such as methylene, ethylene, propylene, butylene, pentylene, hexylene, heptylene, octylene, nonylene, ethers, urethanes, ureas, esters, thioethers, carbonates, and amides; branched hydrocarbons such as isopropylene, isobutylene, 2,2-dimethylpropylene, and 2-ethyl-2-methylpropylene; cyclic hydrocarbons such as cyclohexylene, cyclopentylene, norbomenylene, phenylene, and naphthylene; and PEG chains, as well as trivalent or tetravalent groups corresponding to the foregoing groups. The hydrogen atoms in these hydrocarbon groups may be replaced by any of the substituents mentioned above.

The structures of Z¹ and/or Z² are independent from each other and may be the same as or different from each other. Moreover, when n ≥ 2, or m ≥ 2, or a combination of m ≥ 1 and k ≥ 2, a plurality of Z¹ or Z² groups are present in the molecule and the plurality of Z¹ or Z² groups may be the same as or different from each other. When the structures of Z¹ and/or Z² are different from each other, the degradability and solvent solubility of the degradable compound can be controlled by selecting the combination of the structures. Examples of embodiments in which the structures of Z¹ and/or Z² are different from each other are as follows:
- one or more Z¹ groups and one or more Z² groups are present;
- two or more Z¹ groups are present;
- two or more Z² groups are present;
- one or more Z¹ groups and two or more Z² groups are present; and
- two or more Z¹ groups and one or more Z² groups are present.

Examples of such combinations of two or more Z groups include a combination of Z which imparts high water solubility to the degradation product and Z which imparts low water solubility to the degradation product. Other examples of combinations in terms of the properties before degradation include a combination of Z with a high molecular weight and Z with a low molecular weight, a combination of hydrophilic Z and hydrophobic Z, a combination of Z with high polarity and Z with low polarity, and a combination of Z having a flexible structure and Z having a rigid structure.

The degradable compound preferably does not have a cyclic structure containing two or more Z¹ or Z² groups. This is because if the degradable compound has a cyclic structure containing two or more Z¹ or Z² groups, the solvent solubility may decrease depending on the number of such cyclic structures. Examples of the cyclic structure containing two or more Z¹ or Z² groups include cyclic structures formed by bonding at least two of R¹, R², R³, Z¹, and Z² to each other.

### <Molecular weight of R and/or Z>

In formula (1), at least one selected from the group consisting of R¹, R², and R³ and/or at least one selected from the group consisting of Z¹ and Z² has a molecular weight of 200 or more. The solvent solubility of the degradable compound can be enhanced by adjusting the molecular weight of R and/or Z in such a range. Furthermore, when the degradable compound is used to produce a cured product, precipitation can be suppressed, resulting in a formed product with uniform composition and physical properties.

When two or more R¹, R², or R³ groups are present, only one of them may have a molecular weight of 200 or more. For example, when the degradable compound contains two or more R¹ groups, one of the R¹ groups may have a molecular weight of 200 or more. Furthermore, at least two selected from the group consisting of R¹, R², and R³ each preferably have a molecular weight of 200 or more. Preferably, R¹, R², and R³ each have a molecular weight of 200 or more.

Similarly, when two or more Z¹ or Z² groups are present, only one of them may have a molecular weight of 200 or more. Furthermore, Z¹ and Z² each preferably have a molecular weight of 200 or more. Particularly preferably, at least one selected from the group consisting of R¹, R², and R³ and at least one selected from the group consisting of Z¹ and Z² each have a molecular weight of 200 or more.

Although the molecular weight is 200 or more, it is preferably 300 or more, more preferably 700 or more, still more preferably 900 or more. Although the upper limit of the molecular weight is not limited, it is generally 1000000 or less. When the molecular weight falls within the above range, the degradable compound can exhibit enhanced solvent solubility and can be suitably used as a degradable cross-linking agent. The molecular weight of R¹, R², R³, Z¹, and Z² can be determined, for example, by gel permeation chromatography (GPC) or NMR structural determination of a degradation product produced by bringing the degradable compound into contact with an oxidizing agent. When the molecular weight is determined by gel permeation chromatography (GPC), it is determined as a weight-average molecular weight (Mw).

In formula (1), when n = 0, at least one selected from the group consisting of R¹ and R² preferably has a molecular weight of 300 or more, more preferably 700 or more. This tends to lead to high solvent solubility and a reduced likelihood of crystal precipitation.

In formula (1), preferably, n ≥ 1 and k ≥ 1. In this case, the degradable compound is branched so that, for example, when it is used as a degradable crosslinking agent, it enables three-dimensional cross-linking.

Also, in formula (1), preferably, n ≥ 1 and k ≥ 1, and Z¹ has a molecular weight of 200 or more, more preferably 300 or more, still more preferably 700 or more. In this case, the degradable compound can be a branched compound having Z¹ as the main backbone and having two or more hydrazine-derived structures (-A-NH-NH-A-) in the side chains. When such a degradable compound is used as a degradable cross-linking agent, it enables three-dimensional cross-linking.

In order to make the structure of the degradable compound complex, suppress crystallization, and enhance solvent solubility, preferably, formula (1) satisfies n ≥ 2, m ≥ 2, or a combination of m ≥ 1 and k ≥ 2, and contains a plurality of Z¹ or Z² groups. In this case, at least one of the plurality of Z¹ or Z² groups preferably has a molecular weight of 200 or more. More preferably, n ≥ 2 and m ≥ 2, and at least one of the plurality of Z¹ or Z² groups has a molecular weight of 200 or more. Still more preferably, at least one of the plurality of Z¹ or Z² groups has a molecular weight of 300 or more, particularly preferably 700 or more.

### <Q₁, Q², and Q³ in formula (1)>

In formula (1), Q¹, Q², and Q³ each independently represent a reactive functional group, a hydrogen atom, or a halogen atom. Q¹, Q², and Q³ are bonded to hydrazine-derived structures (-A-NH-NH-A-) via R¹, R², and R³, respectively.

Examples of the reactive functional group include a hydroxyl group, an amino group, a thiol group, a hydrazide group, a carboxylic acid, an acid anhydride group, a vinyl group, an allyl group, an acrylate group, a methacrylate group, a crotonate group, an isoprenyl group, an acrylamide group, a methacrylamide group, a crotonamide group, an epoxy group, an oxetane group, an oxazoline group, an isocyanate group, a carbodiimide group, a methylol group, a silanol group, a hydroxysilyl group, and an alkoxysilyl group.

p1, p2, and p3 represent the numbers of Q¹, Q², and Q³ groups, respectively, in the degradable compound. p1, p2, and p3 each represent 1 or more and are each independently preferably 1 to 4, more preferably 1 to 2. When Q¹, Q², and Q³ are reactive functional groups and p1, p2, and p3 are each 2 or more, the degradable compound can be used as a cross-linking agent to easily achieve three-dimensional cross-linking, thereby providing a cross-linked product with enhanced strength and reliability. When p1 ≥ 2, p2 ≥ 2, or p3 ≥ 2, and the plurality of Q¹ groups, the plurality of Q² groups, or the plurality of Q³ groups, respectively, are mutually different reactive functional groups, the use of the degradable compound as a cross-linking agent allows for flexible selection of various types of curable resins or cross-linking processes. Moreover, when only a specific reactive functional group is cross-linked, the reactive functional groups not involved in the cross-linking reaction can contribute to enhancing properties such as adhesiveness or solubility. When p1 = 1, p2 = 1, or p3 = 1, the degradation rate can be further enhanced.

Q¹, Q², and Q³ may each independently be a hydrogen atom or a halogen atom. Examples of the halogen atom include fluorine (F), chlorine (Cl), bromine (Br), and iodine (I).

### <A¹ to A⁸ in formula (1)>

In formula (1), A¹ to A⁸ each independently represent a carbonyl group or a single bond, at least one of A¹ and A² is a carbonyl group, at least one of A³ and A⁴ is a carbonyl group, at least one of A⁵ and A⁶ is a carbonyl group, and at least one of A⁷ and A⁸ is a carbonyl group. When one of the two A groups present at both ends of -NH-NH- is a carbonyl group, the degradable compound has a monoacylhydrazine structure, and the rate of degradation with an oxidizing agent tends to be enhanced. When both A groups are carbonyl groups, the degradable compound has a diacylhydrazine structure, and the degradation product tends to dissolve easily in a solution containing an oxidizing agent.

### <Physical properties of degradable compound>

The degradable compound preferably has a weight average molecular weight of 300 to 1,000,000, more preferably 400 to 500,000. When the degradable compound having a molecular weight falling within the above range is used as a cross-linking agent, the cross-link density and solvent solubility can be easily controlled.

The degradable compound is preferably liquid at 30°C to 60°C, more preferably at 30°C to 40°C. Such a degradable compound can exhibit excellent miscibility with other components when prepared into a composition, and suppression of precipitation of other components during the forming process.

The degradable compound is preferably degradable upon contact with an oxidizing agent. The oxidizing agent may be any oxidizing agent other than molecular oxygen. Examples include sodium hypochlorite, potassium hypochlorite, calcium hypochlorite, ammonium hypochlorite, hydrogen peroxide, peracetic acid, m-chloroperoxybenzoic acid, peroxybenzoic acid, ammonium hypobromite, calcium hypobromite, potassium hypobromite, sodium hypobromite, and ozone. These may be used alone or in combination of two or more. In particular, a water-soluble salt such as sodium hypochlorite or sodium hypobromite or ozone water is preferred. Such an oxidizing agent is preferably reacted in the form of a degradation liquid prepared by mixing the oxidizing agent with an alkali aqueous solution (e.g., sodium hydroxide, potassium hydroxide, calcium hydroxide, sodium carbonate, sodium hydrogen carbonate, or tetramethylammonium hydroxide) or an organic solvent such as an alcohol (e.g., ethanol, methanol, or isopropanol), a surfactant, etc. The oxidizing agent concentration in the aqueous solution is preferably 0.001 to 50% by weight, more preferably 0.01 to 3% by weight.

The degradable compound is preferably brought into contact with the oxidizing agent-containing aqueous solution at a temperature of 100°C or lower, more preferably 15°C to 50°C. The duration is preferably 60 minutes or shorter, more preferably 10 minutes or shorter. If necessary, shaking or stirring may be performed during the reaction with the oxidizing agent. Non-limiting specific examples of the method for bringing the degradable compound into contact with the oxidizing agent-containing aqueous solution include immersing the degradable compound in the oxidizing agent-containing aqueous solution, or spraying or adding dropwise the oxidizing agent-containing aqueous solution onto the degradable compound.

Preferably, the degradable compound is oxidized upon contact with the oxidizing agent to produce N₂, H₂O, and at least one of the degradation products represented by the following formulas (2) to (8):

HO-CO-Z¹(COOH)ₖ-COOH (2);

H-Z¹(COOH)ₖ-COOH (3);

HO-CO-Z¹(H)ₖ-COOH (4);

H-Z¹(H)ₖ-H (5);

HO-CO-Z²-COOH (6);

H-Z²-COOH (7);

and

H-Z²-H (8).

In formulas (2) to (8), Z and k are the same as those in formula (1). The H or carboxyl group directly bonded to Z may be bonded to a heteroatom in Z.

When a hydrazine-derived structure (-A-NH-NH-A-) is bonded to a carbon atom in Z¹ or Z² and A is a carbonyl group, the degradation product contains a carboxyl group, as shown by formulas (2) to (4), (6), and (7). Specific examples of the carboxylic acids represented by formulas (2) to (4), (6), and (7) include succinic acid, malonic acid, adipic acid, phthalic acid, trimellitic acid, and polyacrylic acid.

When a hydrazine-derived structure (-A-NH-NH-A-) is bonded to an oxygen atom or nitrogen atom in Z and A is a carbonyl group, the degradation product is an alcohol represented by formula (5) or (8) or an amine. Specific examples of the alcohol represented by formula (5) or (8) include ethylene glycol, diethylene glycol, triethylene glycol, hexanediol, pentitol, pentaerythritol, polyethylene glycol, polyvinyl alcohol, resorcinol, and phenol novolac. Specific examples of the amine represented by formula (3) include hexamethylenediamine, pentamethylenediamine, isophoronediamine, toluenediamine, and diaminodiphenylmethane.

The degradability of the degradable compound upon contact with the oxidizing agent may be evaluated by any method that can be selected appropriately depending on the solvent solubility of the degradable compound and the solvent solubility of the degradation product. An exemplary method may be used in which 2 mL of a 20% aqueous sodium hypochlorite solution is added to 2 mg of the degradable compound, followed by reaction at room temperature for 30 minutes. Another method may be used in which 2 mg of the degradable compound is mixed with 0.5 mL of a heavy solvent such as heavy water, deuterated chloroform, deuterated DMSO, or deuterated methanol, and several drops of a 20% aqueous sodium hypochlorite solution are added, followed by reaction at room temperature for five minutes. After such a process, the degradable compound is preferably completely degraded. The degradation products can be analyzed by NMR.

### <Method for synthesizing degradable compound>

The degradable compound can be synthesized by any method. Examples of such methods include a reaction of a hydrazide compound, a semicarbazide compound, or a carbazate compound with a carbonate compound, an isocyanate compound, an acid anhydride, an acid halide, or a cyclic ester compound; a reaction of hydrazine with a carboxylic acid ester; a reaction of hydrazine with a carbonate compound; and a reaction of hydrazine with an isocyanate compound.

Examples of hydrazide compounds that can be used in the synthesis method include lactic acid hydrazide, acrylic acid hydrazide, methacrylic acid hydrazide, sebacic acid dihydrazide, adipic acid dihydrazide, phthalic acid dihydrazide, succinic acid monohydrazide, succinic acid dihydrazide, α-resorcylic acid hydrazide, salicylic acid dihydrazide, trimellitic acid trihydrazide, 4-hydroxybutyric acid hydrazide, 6-hydroxyhexanoic acid hydrazide, citric acid trihydrazide, 4-pentenoic acid hydrazide, 3-cyclohexene-1-carboxylic acid hydrazide, trimesic acid trihydrazide, 3-mercaptopropanehydrazide, allylacetohydrazide, and 4-hydroxybenzohydrazide. Examples of carbonate compounds include allyl N-succinimidyl carbonate and C,C'-(oxydi-2,1-ethanediyl)bis-N-succinimidyl carbonate. Examples of isocyanate compounds include 2-isocyanatoethyl methacrylate, hexamethylene diisocyanate, toluene diisocyanate, and polymethylene polyphenyl polyisocyanate. Examples of semicarbazide compounds include N-allylhydrazinecarboxamide, N,N'-1,6-hexanediylbis[hydrazinecarboxamide], 4,4'-isophoronebis(semicarbazide), and 4,4'-(1,3-phenylenebismethylene)bis(semicarbazide). Examples of carbazate compounds include allyl carbazate and C,C'-(oxydi-2,1-ethanediyl)biscarbazate. Examples of acid anhydrides include methacrylic anhydride, succinic anhydride, and pyromellitic dianhydride. Examples of acid halides include acryloyl chloride, sebacoyl chloride, adipoyl chloride, phthaloyl chloride, salicyloyl chloride, and trimesoyl chloride. Examples of cyclic ester compounds include propiolactone, butyrolactone, and valerolactone. Examples of carboxylic acid esters include ethyl lactate, methylparaben, monomethyl succinate, diethyl adipate, and trimethyl trimellitate.

### <<Degradable cross-linking agent>>

The degradable cross-linking agent of the present invention includes the above-described degradable compound. In this case, in formula (1), Q¹, Q², and Q³ are each independently at least one reactive functional group selected from the group consisting of a hydroxyl group, an amino group, a thiol group, a hydrazide group, a carboxylic acid, an acid anhydride group, a vinyl group, an allyl group, an acrylate group, a methacrylate group, a crotonate group, an isoprenyl group, an acrylamide group, a methacrylamide group, a crotonamide group, an epoxy group, an oxetane group, an oxazoline group, an isocyanate group, a carbodiimide group, a methylol group, a silanol group, a hydroxysilyl group, and an alkoxysilyl group.

It should be noted that although the term "cross-linking agent" may narrowly refer to a chemical substance capable of forming a chemical bond between polymers or within a polymer, the term as used herein refers not only to a chemical substance capable of forming a chemical bond between polymers or within a polymer but also to a chemical substance capable of forming a chemical bond between the molecules of the chemical substance itself.

When p1 ≥ 2, p2 ≥ 2, or p3 ≥ 2, and the plurality of Q¹ groups, the plurality of Q² groups, or the plurality of Q³ groups, respectively, are mutually different reactive functional groups in the degradable cross-linking agent, the degradable cross-linking agent allows for flexible selection of various types of curable resins or cross-linking processes. Furthermore, when only a specific reactive functional group is cross-linked, the reactive functional groups not involved in the cross-linking reaction can contribute to enhancing properties such as adhesiveness or solubility. When p1 = 1, p2 = 1, or p3 = 1, the degradation rate can be further enhanced.

Since the degradable cross-linking agent has excellent solvent solubility, it can be used for cross-linking various resins. Examples of applications of the cross-linked product obtained using the degradable cross-linking agent of the present invention include adhesives, pressure-sensitive adhesives, water-absorbent resins, resins for 3D printing, photoresists, release agents, cell culture media, immobilization materials for affected areas, and imprint molded articles.

### <<Composition>>

The composition of the present invention contains the above-described degradable cross-linking agent and at least one selected from the group consisting of a curable resin, a polymerization initiator, and a solvent. The degradable cross-linking agent content in the composition is preferably 0.1 to 99% by weight, more preferably 1 to 70% by weight, still more preferably 2 to 50% by weight.

### <Curable resin>

The curable resin may be any curable resin having a structure that can react with a reactive functional group in the degradable cross-linking agent for cross-linking. Examples of the curable resin include acrylic resins, phenolic resins, epoxy resins, melamine resins, urea resins, unsaturated polyester resins, alkyd resins, silicone resins, isocyanate compounds, and polyimides. The curable resin may be a thermosetting resin or a photocurable resin. The curable resin content in the composition is preferably 0.1 to 95% by weight, more preferably 1 to 50% by weight.

### <Polymerization initiator>

The polymerization initiator may be any compound that can catalyze the polymerization of the curable resin used and may be either a thermal polymerization initiator or a photopolymerization initiator. Examples of the polymerization initiator include radical generators such as alkylphenone compounds, benzoin compounds, benzophenone compounds, oxime ester compounds, and phosphine compounds; base generators such as oxime ester compounds, ammonium compounds, benzoin compounds, dimethoxybenzyl urethane compounds, and o-nitrobenzyl urethane compounds; acid generators such as onium salts, halogen-containing compounds, diazomethane compounds, sulfone compounds, and sulfonate compounds; tin compounds such as dibutyltin dilaurate and dibutyltin diacetate; bismuth compounds such as bismuth 2-ethylhexanoate; titanium compounds such as tetraoctyl titanate and titanium ethyl acetoacetate; zirconium compounds such as zirconium monoacetylacetate and zirconium tetraacetylacetate; amines such as triethylenediamine and 1,4-diazabicyclo[2.2.2]octane (DABCO); platinum compounds such as chloroplatinic acid and alkenylsiloxane platinum complexes; iron complexes; and cobalt complexes. The polymerization initiator content in the composition is preferably 0.1 to 10 parts by weight, more preferably 1 to 5 parts by weight, per 100 parts by weight of the curable resin content.

### <Solvent>

Examples of the solvent include water and organic solvents. Examples of the organic solvents include carbon atom-containing solvents such as ether solvents, amide solvents, hydrocarbon solvents, alcohol solvents, ester solvents, aldehyde solvents, ketone solvents, and solvents containing carbon atoms and heteroatoms.

Examples of the ether solvents include propylene glycol monomethyl ether, anisole, 4-methylanisole, diisopropyl ether, diethyl ether, dibutyl ether, tetrahydrofuran, dimethoxyethane, cyclopentyl methyl ether, and tert-butyl methyl ether. Examples of the amide solvents include dimethylformamide, dimethylacetamide, and N-methylpyrrolidone. Examples of the hydrocarbon solvents include aliphatic hydrocarbon solvents such as pentane, hexane, heptane, octane, nonane, decane, undecane, dodecane, and cyclohexane, and aromatic hydrocarbon solvents such as benzene, toluene, xylene, mesitylene, ethylbenzene, tert-butylbenzene, trifluoromethylbenzene, nitrobenzene, and chlorobenzene. Examples of the alcohol solvents include methanol, ethanol, propanol, butanol, ethylene glycol, and propylene glycol monomethyl ether. Examples of the ester solvents include ethyl acetate, butyl acetate, and propylene glycol monomethyl ether acetate. Examples of the aldehyde solvents include formaldehyde and acetaldehyde. Examples of the ketone solvents include acetone, methyl ethyl ketone, and methyl isobutyl ketone. Examples of the solvents containing carbon atoms and heteroatoms include acetonitrile and dimethyl sulfoxide. The solvent content in the composition is preferably 5 to 99% by weight, more preferably 20 to 80% by weight.

The above-listed solvents may be used alone or in combination of two or more. Moreover, the solvent used preferably has a boiling point of 150°C or lower, more preferably 130°C or lower, still more preferably 110°C or lower. When the boiling point is within the above range, the solvent can be removed by heating for a relatively short time. Preferably, the amount of solvents having a boiling point of higher than 150°C in the composition is less than 1% by weight.

### <<Degradable cross-linked product>>

The degradable cross-linked product of the present invention is a cured product of a composition containing the degradable cross-linking agent and at least one selected from the group consisting of a curable resin, a polymerization initiator, and a solvent. The degradable cross-linked product can be produced from the composition by any method that can promote the polymerization and cross-linking of the curable resin. A person skilled in the art can appropriately select the conditions for light irradiation, heating, or other processes depending on the types of the degradable cross-linking agent, the curable resin, and the polymerization initiator contained in the composition. For example, a three-dimensional formed body of the degradable cross-linked product can be produced by injection molding, compression molding, transfer molding, 3D printing, photolithography, or other methods.

Moreover, a coating film including the degradable cross-linked product can be formed by applying the composition onto a substrate to form a coating film, and subjecting the coating film to light irradiation or heating. The material or form of the substrate is not limited and may be a resin, an inorganic material, paper, or fabric. Examples of the resin include polyesters such as polyethylene terephthalate, polyethylene naphthalate, polylactic acid, polyhydroxybutyric acid, and polybutylene succinate; polyolefins such as polyethylene, polypropylene, and polymethylpentene; cycloolefins, polystyrenes, polytetrafluoroethylene, PMMA, polyamides such as nylon 6 and nylon 66, polycarbonates, poly(vinyl acetate), poly(vinyl alcohol), polyimides, ABS resins, cellulose, cellulose acetate, fibroin, and keratin. Examples of the inorganic material include glass, metals such as Ni, Cu, Cr, Fe, and Si, and oxides or composite materials thereof.

Examples of the method for applying the composition onto the substrate include bar coating, spin coating, spray coating, dip coating, nozzle coating, gravure coating, reverse roll coating, die coating, air doctor coating, blade coating, rod coating, curtain coating, knife coating, transfer roll coating, squeeze coating, impregnation coating, kiss coating, calender coating, and extrusion coating.

The composition applied on the substrate can be cured under any condition. The conditions for curing by light irradiation may include a light irradiation dose of 100 to 2000 mJ/cm². Curing by heating may be performed preferably at a heating temperature of 40°C to 300°C, more preferably 80°C to 120°C. Moreover, the duration of heating is preferably 0.5 to 180 minutes, more preferably 0.5 to 10 minutes.

The thickness of the cured coating film is preferably, but not limited to, 0.01 to 30 µm, more preferably 0.05 to 10 µm. The coating film having a thickness within the above range can maintain the strength and adhesion to the substrate.

The degradable cross-linked product is preferably degradable upon contact with an oxidizing agent. Moreover, a method for degrading the degradable compound preferably includes bringing the degradable cross-linked product into contact with an aqueous solution containing an oxidizing agent at 100°C or lower. The criteria for degradability upon contact with an oxidizing agent and the conditions for degradation are the same as those described above for the degradable compound. The oxidizing agent-containing aqueous solution may be mixed with an organic solvent for dissolving the degradation product or additive.

### EXAMPLES

The present invention is described below with reference to examples, but the present invention is not limited thereto. Hereinafter, the units "part(s)" and "%" refer to "part(s) by weight" and "% by weight", respectively, unless otherwise specified.

### (Example 1)

An amount of 11.1 g of poly(acrylic acid hydrazide) having a molecular weight of about 1000 and 138 g of dimethyl sulfoxide were mixed in a 300 mL round-bottom flask, and then 5.0 g of 2-isocyanatoethyl methacrylate was added dropwise to the mixture at room temperature. After stirring for four hours, 10.6 g of succinic anhydride was added to the mixture, followed by further stirring for two hours. The reaction liquid was added dropwise to 1651 g of methyl isobutyl ketone. The resulting solid was dried in a vacuum dryer at 50°C to obtain a degradable compound having a structure of formula (A1) in a yield of 60%. 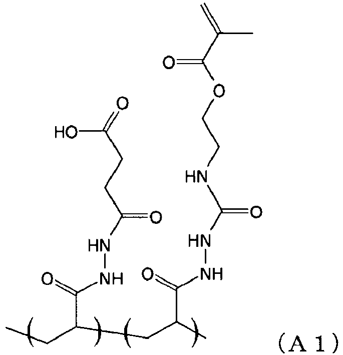 1H-NMR (DMSO, δ ppm) 1.55 (20H, br, backbone CH₂), 2.11 (10H, br, backbone CH), 1.88 (9H, s, CH₃), 2.46 (28H, br, COCH₂CH₂CO), 3.47-3.51 (6H, m, NCH₂), 4.04-4.08 (6H, m, OCH₂), 5.67 (3H, d, C=CH₂), 6.06 (3H, d, C=CH₂), 6.43-6.52 (3H, m, CONHC), 9.82 (20H, br, NHNH), 12.12 (7H, br, COOH)

Upon adding a small amount of a 20% aqueous sodium hypochlorite solution to the obtained degradable compound of formula (A1), foaming occurred. 1H-NMR analysis confirmed the generation of polyacrylic acid as a degradation product.

An amount of 0.3 g of the degradable compound of formula (A1) and 12 mg of a photopolymerization initiator (Omnirad 907 available from IGM Resins) were dissolved in 1.5 g of a solvent mixture of methanol and propylene glycol monomethyl ether (weight ratio 1:1) to prepare a composition for producing a degradable cross-linked product. The composition was applied onto a glass plate to give a dried film thickness of 10 µm, and dried using a fan dryer at 150°C for five minutes, followed by exposure to ultraviolet rays at 500 mJ/cm² using a UV irradiation device (Unicure UVH-1500M available from USHIO Inc.) to obtain a degradable cross-linked product. No precipitate was formed on the dried coating film. The degradable cross-linked product was insoluble in ion-exchanged water, but when it was immersed in a 5% aqueous sodium hypochlorite solution at 20°C, foaming occurred and the product was completely removed from the substrate and dissolved within one minute.

An amount of 0.3 g of the compound of formula (A1), 0.1 g of acryloylmorpholine (ACMO available from KJ Chemicals Corporation), and 12 mg of a photopolymerization initiator (Omnirad 907 available from IGM Resins) were dissolved in 1.5 g of a solvent mixture of methanol and propylene glycol monomethyl ether (weight ratio 1:1) to prepare a composition for producing a degradable cross-linked product. The composition was applied onto a glass plate to give a dried film thickness of 10 µm, and dried using a fan dryer at 150°C for five minutes, followed by exposure to ultraviolet rays at 500 mJ/cm² using a UV irradiation device (Unicure UVH-1500M available from USHIO Inc.) to obtain a degradable cross-linked product. No precipitate was formed on the dried coating film. The degradable cross-linked product was insoluble in ion-exchanged water, but when it was immersed in a 5% aqueous sodium hypochlorite solution at 20°C, foaming and removal of the resin from the substrate were observed.

### (Example 2)

An amount of 10 g of a triol polypropylene glycol with a molecular weight of about 1500 (available from FUJIFILM Wako Pure Chemical Corporation), 40 g of acetonitrile, and 18.2 g of triethylamine were mixed in a 100 mL round-bottom flask, and 15.3 g of di(N-succinimidyl) carbonate was added to the mixture, followed by stirring at room temperature overnight to precipitate a solid. The solid was removed by filtration, and then 54 g of chloroform and 100 g of pure water were added to the filtrate to perform a liquid separation process. After removing the aqueous layer, the solvent was removed by evaporation to a concentration of 80%. After adding 72 g of methanol thereto, 0.22 g of succinic acid monohydrazide was added, and the mixture was stirred at room temperature for four hours. The completion of the reaction was confirmed by NMR. Subsequently, 0.58 g of α-resorcylic acid hydrazide was added, and the mixture was further stirred overnight. The reaction liquid was concentrated with an evaporator, and then 60 g of ethyl acetate was added to the residue. The solution was washed three times with 85 g of pure water. Then, the organic solvent was removed by evaporation to obtain a degradable compound having a structure of formula (A2) in a yield of 70%. 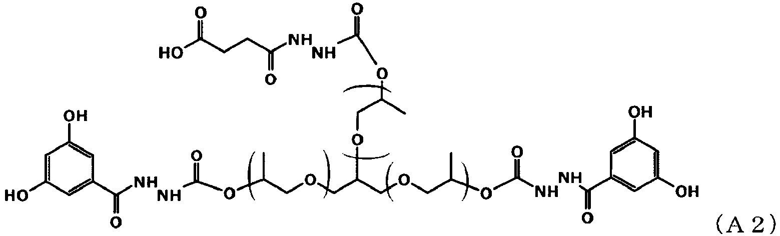 1H-NMR (DMSO, δ ppm) 1.04 (73H, d, CH₃), 2.60 (4H, br, CH₂CH₂), 3.3-3.6 (75H, m, CHCH₂), 4.76 (3H, br, COOCH), 6.38 (2H, t, benzene ring), 6.67 (4H, d, benzene ring), 9.05 (3H, br, NHNH), 9.49 (4H, br, OH), 10.00 (3H, br, NHNH), 12.00 (1H, br, COOH)

The obtained degradable compound of formula (A2) was liquid at 30°C.

Upon adding a small amount of a 20% aqueous sodium hypochlorite solution to the obtained degradable compound of formula (A2), foaming occurred. 1H-NMR analysis confirmed the generation of α-resorcylic acid and succinic acid as degradation products.

A cross-linking composition was prepared by stirring and mixing 3 g of the degradable compound of formula (A2), 0.8 g of polyethylene glycol diglycidyl ether (Denacol EX-821 available from Nagase ChemteX Corporation), and 0.05 g of 1,8-diazabicyclo(5.4.0)-undecene-7. A piece of 80 µm thick water-dispersible paper was impregnated with the composition, and the surface was lightly squeezed and then heated using a fan dryer at 130°C for 20 minutes to obtain a degradable cross-linked product. No precipitate was formed on the degradable cross-linked product. The degradable cross-linked product was insoluble in ion-exchanged water and ethanol, but when it was immersed in a mixture solution of a 20% aqueous sodium hypochlorite solution and ethanol (weight ratio 1:1) and stirred at room temperature, foaming occurred, and degradation of the resin and disintegration of the fibers were observed.

### (Example 3)

An amount of 10 g of a dual end-type carbinol-modified polydimethylsiloxane having a molecular weight of about 1000 (KF-6000 available from Shin-Etsu Chemical Co., Ltd.), 16 g of acetone, and 6.5 g of triethylamine were mixed in a 100 mL round-bottom flask, and 6.0 g of di(N-succinimidyl) carbonate was added to the mixture, followed by stirring at room temperature overnight. To the reaction liquid were added 47 g of chloroform and 3.1 g of 4-pentenoic acid hydrazide, and they were stirred again at room temperature overnight. The reaction liquid was transferred to a separatory funnel, and 140 g of chloroform was added thereto. Then, the organic layer was washed three times with 140 g of pure water. After the washing, the organic layer was removed by evaporation to obtain a degradable compound having a structure of formula (A3) in a yield of 98%.

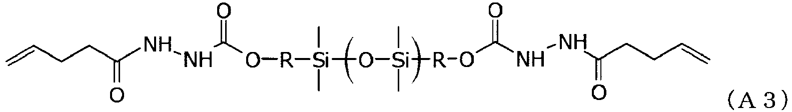

In the formula, R represents a hydrocarbon group.
1H-NMR (CDCl₃, δ ppm) 0.06 (76H, br, CH₃), 2.29-2.46 (8H, m, CH₂CH₂), 4.96-5.10 (4H, m, CH=CH₂), 5.76-5.94 (2H, m, CH=CH₂), 7.74 (2H, br, NHNH), 8.41 (2H, br, NHNH)

The obtained degradable compound of formula (A3) was liquid at 30°C.

Upon adding a small amount of a 20% aqueous sodium hypochlorite solution to the obtained degradable compound of formula (A3), foaming occurred. 1H-NMR analysis confirmed the generation of 4-pentenoic acid as a degradation product.

An amount of 0.3 g of the degradable compound of formula (A3), 0.03 g of poly(methylhydrosiloxane), and 4.0 mg of a platinum catalyst (trade name: CAT-PL-50T, available from Shin-Etsu Chemical Co., Ltd.) were added to 30 g of ethyl acetate, and they were mixed to prepare a cross-linking composition solution. The solution was applied onto a PET film substrate to give a cured film thickness of 0.1 µm, and then dried and cured at 130°C for two minutes to obtain a degradable cross-linked product. No precipitate was formed on the coating film. The degradable cross-linked product was insoluble in water and ethyl acetate, but when it was immersed in a 10% aqueous sodium hypochlorite solution, foaming and degradation of the product were observed. Then, the entire coating film was removed upon immersion in ethyl acetate.

### (Example 4)

An amount of 10 g of a dual end-type carbinol-modified polydimethylsiloxane having a molecular weight of about 1000 (KF-6000 available from Shin-Etsu Chemical Co., Ltd.), 16 g of acetone, and 6.5 g of triethylamine were mixed in a 100 mL round-bottom flask, and 6.0 g of di(N-succinimidyl) carbonate was added to the mixture, followed by stirring at room temperature overnight. To the reaction liquid were added 47 g of chloroform and 3.3 g of 3-cyclohexene-1-carboxylic acid hydrazide, and they were stirred again at room temperature overnight. The reaction liquid was transferred to a separatory funnel, and 140 g of chloroform was added thereto. Then, the organic layer was washed three times with 140 g of pure water. After the washing, the organic layer was removed by evaporation to obtain a degradable compound having a structure of formula (A4) in a yield of 97%.

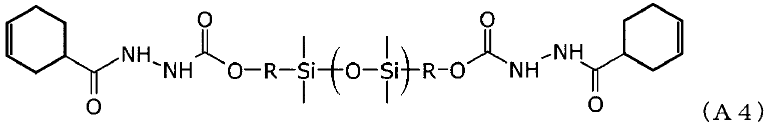

In the formula, R represents a hydrocarbon group.
1H-NMR (CDCl₃, δ ppm) 0.06 (76H, br, CH₃), 1.71-1.77 (2H, m, CH₂), 1.87-1.97 (2H, m, CH₂), 2.05-2.34 (8H, m, CH₂), 2.35-2.52 (2H, m, CH), 5.69-5.72 (4H, m, CH=CH), 7.57 (2H, br, NHNH), 8.22 (2H, br, NHNH)

The obtained degradable compound of formula (A4) was liquid at 50°C.

Upon adding a small amount of a 20% aqueous sodium hypochlorite solution to the obtained degradable compound of formula (A4), foaming occurred. 1H-NMR analysis confirmed the generation of 3-cyclohexene-1-carboxylic acid as a degradation product.

### (Example 5)

An amount of 10 g of poly(methyl acrylate) having a hydroxyl group at one terminal and a molecular weight of about 1000 (UMM-1001 available from Soken Chemical & Engineering Co., Ltd.), 13 g of acetonitrile, and 5.1 g of triethylamine were mixed in a 100 mL round-bottom flask, and 4.7 g of di(N-succinimidyl) carbonate was added to the mixture, followed by stirring at room temperature overnight. Next, 1.4 g of trimesic acid trihydrazide and 80 g of dimethyl sulfoxide were added to the mixture, followed by stirring at 60°C for four hours. The reaction liquid was transferred to a separatory funnel, and 210 g of ethyl acetate and 210 g of pure water were added thereto, followed by removing the aqueous layer. The organic layer was further washed four times with 90 g of pure water. Then, the organic solvent was removed by evaporation to obtain a degradable compound having a structure of formula (A5) in a yield of 79%.

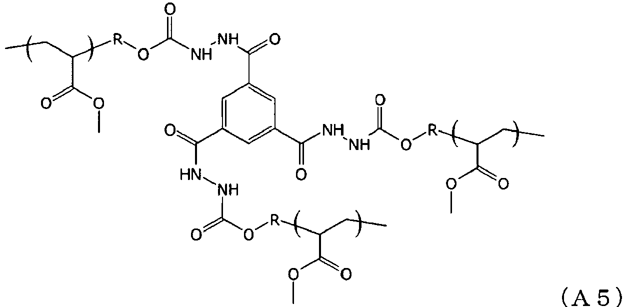

In the formula, R represents a hydrocarbon group.
1H-NMR (DMSO, δ ppm) 1.4-1.9 (69H, m, CH₂), 2.19-2.41 (34H, m, CH), 3.58 (103H, br, OCH₃), 8.48 (3H, s, benzene ring), 9.42 (3H, br, NHNH), 10.59 (3H, br, NHNH)

The obtained degradable compound of formula (A5) was liquid at 30°C.

Upon adding a small amount of a 20% aqueous sodium hypochlorite solution to the obtained degradable compound of formula (A5), foaming occurred. 1H-NMR analysis confirmed the generation of trimesic acid as a degradation product.

### (Example 6)

An amount of 10 g of poly(methyl acrylate) having a molecular weight of about 1000 and having a hydroxyl group at one terminal (UMM-1001 available from Soken Chemical & Engineering Co., Ltd.), 13 g of acetonitrile, and 3.5 g of triethylamine were mixed in a 100 mL round-bottom flask, and 4.7 g of di(N-succinimidyl) carbonate was added to the mixture, followed by stirring at room temperature overnight. Next, 1.8 g of methacrylic acid hydrazide was added, and the mixture was further stirred at room temperature overnight. The reaction liquid was washed four times with 50 g of pure water. Then, 70 g of ethanol was added to the reaction liquid, and the solvent and residual water were removed by evaporation to obtain a degradable compound having a structure of formula (A6) in a yield of 77%.

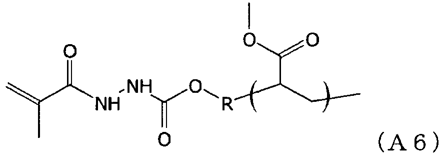

In the formula, R represents a hydrocarbon group.
1H-NMR (DMSO, δ ppm) 1.4-1.9 (22H, m, CH₂), 1.86 (3H, s, CH₃), 2.19-2.41 (11H, m, CH), 3.58 (33H, br, OCH₃), 5.44 (1H, br, C=CH₂), 5.72 (1H, br, C=CH₂), 9.09 (1H, br, NHNH), 9.87 (1H, br, NHNH)

The obtained degradable compound of formula (A6) was liquid at 30°C.

Upon adding a small amount of a 20% aqueous sodium hypochlorite solution to the obtained degradable compound of formula (A6), foaming occurred. 1H-NMR analysis confirmed the generation of methacrylic acid as a degradation product.

An amount of 3.0 g of the degradable compound of formula (A6), 0.3 g of N-(2-hydroxyethyl)acrylamide (HEAA available from KJ Chemicals Corporation), and 0.1 g of a photopolymerization initiator (Omnirad 907 available from IGM Resins) were mixed to prepare a photocurable composition. The composition was applied onto a glass plate to give a dried film thickness of 20 µm, and then exposed to ultraviolet rays at 500 mJ/cm² using a UV irradiation device (Unicure UVH-1500M available from USHIO Inc.) to obtain a degradable cross-linked product. No precipitate was formed on the coating film. The degradable cross-linked product was insoluble in ion-exchanged water, but when it was immersed in a mixture solution of a 20% aqueous sodium hypochlorite solution and propylene glycol monomethyl ether (weight ratio 1:1), foaming occurred and the coating film was removed from the substrate.

### (Example 7)

An amount of 2.0 g of 3-mercaptopropanehydrazide was dissolved in 26 g of THF in a 100 mL round-bottom flask, and 3.0 g of poly(hexamethylene diisocyanate) (available from Sigma Aldrich) was added dropwise to the solution, followed by stirring at room temperature overnight to precipitate a white solid. The white solid was collected by decantation and dried in a vacuum dryer to obtain a degradable compound having a structure of formula (A7) in a yield of 94%. 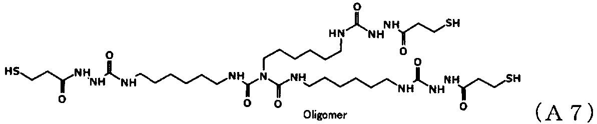 1H-NMR (DMSO, δ ppm) 1.24-1.50 (24H, m, CH₂), 2.41 (6H, t, C=OCH₂), 2.67 (6H, t, SCH₂), 2.97-3.10 (12H, m, NCH₂), 6.26 (3H, s, NH), 7.67 (3H, s, NH), 8.21 (2H, br, NH), 9.50 (3H, s, NH)

Upon adding a small amount of a 20% aqueous sodium hypochlorite solution to the obtained degradable compound of formula (A7), foaming occurred. 1H-NMR analysis confirmed the generation of 3-mercaptopropanoic acid as a degradation product.

An amount of 1.2 g of the degradable compound of formula (A7), 2.3 g of dimethyl silicone having an acrylate group at both terminals (X-22-2445 available from Shin-Etsu Silicone), 0.2 g of a photopolymerization initiator (Omnirad 907 available from IGM Resins), and 0.2 g of a photopolymerization initiator (Omnirad TPO-L available from IGM Resins) were dissolved in 20 g of N-methylpyrrolidone, and 4 g of toluene and 10 g of methyl ethyl ketone were added to the solution to prepare a photocurable composition. The composition was applied onto a glass plate to give a dried film thickness of 0.8 µm, dried at 120°C for 10 minutes, and then exposed to ultraviolet rays at 500 mJ/cm² using a UV irradiation device (Unicure UVH-1500M available from USHIO Inc.) to obtain a degradable cross-linked product. No precipitate was formed on the coating film. The degradable cross-linked product was insoluble in ion-exchanged water, but when it was immersed in a mixture solution of a 10% aqueous sodium hypochlorite solution and a 5% aqueous sodium hydroxide solution (weight ratio 1:1), foaming occurred and the coating film was removed from the substrate.

### (Example 8)

In a 500 mL round-bottom flask, 4 g of the compound of formula (A5) obtained by the method described in Example 5 was dissolved in 168 g of ethanol and 100 g of acetonitrile, and 38 g of hydrazine monohydrate was introduced in four portions into the solution, followed by stirring at room temperature for four days. The reaction liquid was added dropwise to 140 g of ice-cooled isopropanol to precipitate a solid.

The obtained solid was washed with 40 g of acetonitrile and then dried in a vacuum dryer at 50°C for three hours. An amount of 1.0 g of the dried solid was transferred to a 30 mL round-bottom flask and dissolved in 11.1 g of DMSO, and 2.3 g of N-(allyloxycarbonyloxy)succinimide was added to the solution, followed by stirring at room temperature overnight. The reaction liquid was added dropwise to 87 g of ion-exchanged water to precipitate a solid. The obtained solid was dissolved in 6 g of ethanol and then added dropwise to 60 g of methyl isobutyl ketone to precipitate a solid again. The obtained solid was dried in a vacuum dryer at 30°C overnight to obtain 0.5 g of a compound of formula (A8).

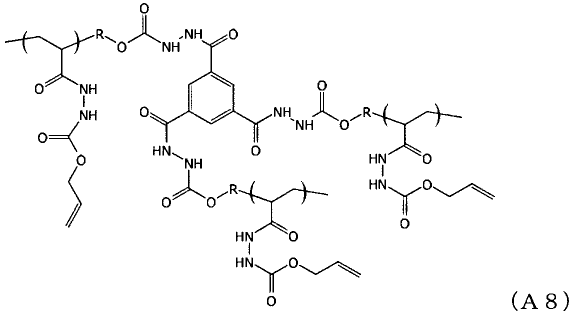

In the formula, R represents a hydrocarbon group.
1H-NMR (DMSO, δ ppm) 1.4-1.9 (75H, m, CH₂), 1.95-2.41 (37H, m, CH), 4.55 (71H, d, OCH₂), 5.21 (35H, t, C=CH₂), 5.32 (35H, d, C=CH₂), 5.91 (35H, br, C=CH), 8.48 (3H, s, benzene ring), 9.30 (72H, br, NHNH), 10.61 (3H, br, NHNH)

Upon adding a small amount of a 20% aqueous sodium hypochlorite solution to the obtained degradable compound of formula (A8), foaming occurred. 1H-NMR analysis confirmed the generation of trimesic acid and allyl alcohol as degradation products.

The compound of formula (A8), pentaerythritol tetrakis(mercaptoacetate), and 4-acryloylmorpholine were mixed at a weight ratio of 3:2:2 and diluted with methanol to a concentration of 15% by weight. Then, 0.2 parts by weight of a photopolymerization initiator (Omnirad 907 available from IGM Resins), 0.2 parts by weight of a photopolymerization initiator (Omnirad TPO-N available from IGM Resins), and 1 part by weight of Pigment Blue 15:3 were added to the dilution to prepare a photocurable composition solution. The composition was applied onto a glass substrate to give a cured film thickness of 2 µm, and then dried at 120°C for one minute, followed by exposure to ultraviolet rays at 200 mJ/cm² using a UV irradiation device (Unicure UVH-1500M available from USHIO Inc.) to obtain a degradable cross-linked product. No precipitate was formed on the coating film. The degradable cross-linked product was insoluble in ion-exchanged water, but when it was immersed in a 1% aqueous sodium hypochlorite solution, foaming and removal of the product from the substrate were observed.

### (Example 9)

An amount of 10 g of a triol polypropylene glycol with a molecular weight of about 1500 (available from FUJIFILM Wako Pure Chemical Corporation), 40 g of acetonitrile, and 18.2 g of triethylamine were mixed in a 100 mL round-bottom flask, and 15.3 g of di(N-succinimidyl) carbonate was added to the mixture, followed by stirring at room temperature overnight to precipitate a solid. The solid was removed by filtration, and then 54 g of chloroform and 100 g of pure water were added to the filtrate to perform a liquid separation process. After removing the aqueous layer, the solvent was removed by evaporation to a concentration of 80%. Then, 11 g of acetonitrile and 2.8 g of triethylamine were added thereto. Then, 0.22 g of 2-hydroxyethyl carbazate was added, and the mixture was stirred at room temperature for four hours. The completion of the reaction was confirmed by NMR. Subsequently, 1.9 g of α-resorcylic acid hydrazide was added, and the mixture was stirred at room temperature for four hours. After concentrating the reaction liquid using an evaporator, 103 g of chloroform was added, and the mixture was transferred again to a separatory funnel. The organic layer was washed twice with 70 g of ion-exchanged water. Then, the solvent was removed using an evaporator to obtain a degradable compound having a structure of formula (A9) in a yield of 61%. The degradable compound of formula (A9) was liquid at 30°C. 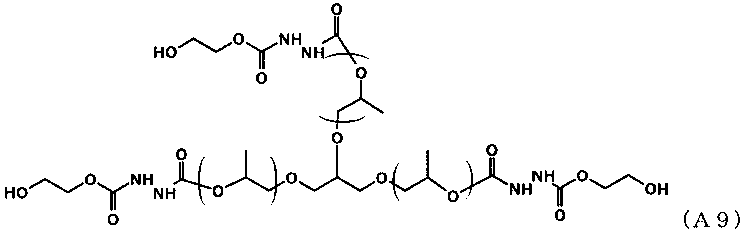 1H-NMR (DMSO, δ ppm) 1.05 (77H, d, CH₃), 3.32-3.67 (80H, m, CH, CH₂), 4.00 (6H, t, O=COCH₂), 4.75 (3H, t, OH), 8.97 (3H, br, NHNH), 8.99 (3H, br, NHNH)

Upon adding a small amount of a 20% aqueous sodium hypochlorite solution to the obtained degradable compound of formula (A9), foaming occurred. 1H-NMR analysis confirmed the generation of ethylene glycol as a degradation product.

An amount of 1.0 g of polymethylene polyphenyl polyisocyanate (Millionate MR-200 available from Tosoh Corporation), 5.0 g of the compound of formula (A9), and 60 mg of a dibutyltin curing catalyst (NEOSTANN U-810 available from Nitto Kasei Co., Ltd.) were mixed to prepare a curable composition solution. The composition was applied onto a nylon 66 woven fabric to give a dried film thickness of 200 µm, and then heated at 60°C for 10 minutes, followed by heating at 40°C for six hours to obtain a degradable cross-linked product. No precipitate was formed on the coating film. The degradable cross-linked product was insoluble in isopropanol and ion-exchanged water, but when it was immersed in a solution prepared by 2-fold dilution of a 5% aqueous sodium dichloroisocyanurate solution with isopropanol, foaming and removal of the product from the substrate were observed.

### (Example 10)

In a 100 mL round-bottom flask, 10 g of a four-branched polyethylene glycol having a molecular weight of approximately 40,000 and having active esterified terminals (4arm-PEG40K-Succinimidyl Carboxymethyl Ester available from Aldrich), 21 g of chloroform, and 0.24 g of triethylamine were mixed, and then 0.11 g of methacrylic acid hydrazide was added to the mixture, followed by stirring at room temperature for three hours. The reaction liquid and 21 g of ion-exchanged water were placed in a separatory funnel to perform a liquid separation process. The lower layer was washed again with 21 g of ion-exchanged water, and the solvent was removed with an evaporator. The residual solid was dried in a vacuum dryer overnight to obtain a degradable compound having a structure of formula (A10) in a yield of 71 %. 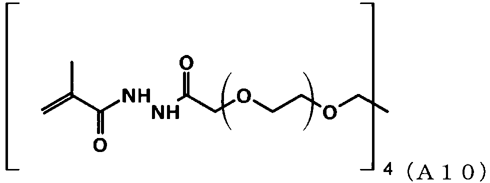 1H-NMR (CDCl₃, δ ppm) 2.01 (12H, br, CH₃), 2.19-2.41 (11H, m, CH), 3.64 (4800H, br, OCH₂), 4.15 (8H, br, O=CCH₂)5.45 (4H, s, C=CH₂), 5.90 (4H, s, C=CH₂), 8.57 (8H, br, NHNH)

Upon adding a small amount of a 20% aqueous sodium hypochlorite solution to the obtained degradable compound of formula (A10), foaming occurred. 1H-NMR analysis confirmed the generation of methacrylic acid as a degradation product.

A photocurable composition was prepared by mixing 0.7 g of the degradable compound of formula (A10), 0.3 g of 4-acryloylmorpholine, 0.05 g of a photopolymerization initiator (Omnirad 127 available from IGM Resins), 0.05 g of a photopolymerization initiator (Omnirad 754 available from IGM Resins), 0.03 g of a silicone leveling agent (BYK-348 available from BYK), 3 g of methanol, and 1 g of ion-exchanged water. The composition was applied onto a glass plate to give a dried film thickness of 10 µm, and dried using a hot plate at 100°C for one minute, followed by exposure to ultraviolet rays at 200 mJ/cm² using a UV irradiation device (Unicure UVH-1500M available from USHIO Inc.) to obtain a degradable cross-linked product. No precipitate was formed on the coating film. The degradable cross-linked product was insoluble in ion-exchanged water, but when it was immersed in a solution prepared by 2-fold dilution of a 5% aqueous sodium dichloroisocyanurate solution with a 2% aqueous sodium hydroxide solution, foaming and removal of the product from the substrate were observed.

### (Example 11)

In a 500 mL separable flask equipped with a reflux condenser, 200 g of polyglycerol polyglycidyl ether having a molecular weight of approximately 710 (Green Denacol GEX-521 available from Nagase ChemteX Corporation), 200 g of toluene, and 1.8 g of tetrabutylammonium bromide were mixed, and then the mixture was stirred at 100°C for 170 hours in a carbon dioxide gas atmosphere. The reaction liquid was transferred to a 1000 mL round-bottom flask, and the toluene was removed using an evaporator. Then, 300 g of chloroform, 200 g of methanol, and 47 g of hydrazine monohydrate were added, and the mixture was stirred overnight at room temperature, after which the solvent was again removed using an evaporator. A 9.6 g portion of the resulting viscous liquid was collected and dissolved in 200 g of methanol in a 500 mL round-bottom flask. Then, 6.0 g of N-(allyloxycarbonyloxy)succinimide was added thereto, and the mixture was stirred for three hours. Thereafter, the solvent was removed by evaporation, 100 g of acetonitrile was added, and the mixture was allowed to stand overnight. The separated acetonitrile layer was removed by decantation, and the remaining viscous liquid was dried overnight in a vacuum dryer to obtain a degradable compound having a structure of formula (A11) in a yield of 86%. The degradable compound of formula (A11) was liquid at 60°C. 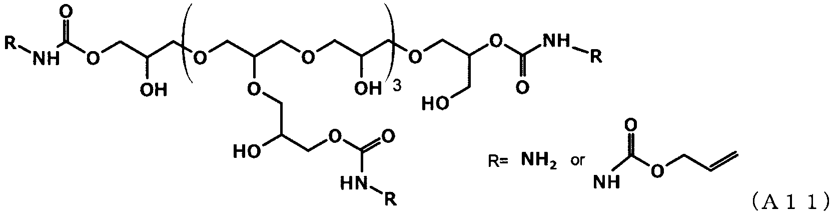 1H-NMR (DMSO, δ ppm) 3.49 (46H, br, OCH), 3.90 (9H, br, O=COCH), 3.99 (4H, br, NH₂), 4.52 (6H, s, C=C-CH₂)4.82 (8H, br, OH), 5.20 (3H, d, C=CH₂), 5.30 (3H, d, C=CH₂), 5.86-5.96 (3H, m, CH=C), 8.14 (2H, br, NH), 9.10 (3H, br, NHNH), 9.13 (3H, br, NHNH)

Upon adding a small amount of a 20% aqueous sodium hypochlorite solution to the obtained degradable compound of formula (A11), foaming occurred. 1H-NMR analysis confirmed the generation of allyl alcohol as a degradation product.

An amount of 2 g of the compound of formula (A11), 0.3 g of pentaerythritol tetrakis(mercaptoacetate), 0.5 g of 4-acryloylmorpholine, and 0.4 g of polymethylene polyphenyl polyisocyanate (Millionate MR-200 available from Tosoh Corporation) were dissolved in 5.5 g of N-methylpyrrolidone, and 0.1 g of a photopolymerization initiator (Omnirad 907 available from IGM Resins), 0.1 g of a photopolymerization initiator (Omnirad TPO-N available from IGM Resins), and 0.03 g of dibutyltin dilaurate were added to the solution to prepare a curable composition solution. The composition was applied onto a glass substrate to give a cured film thickness of 1 µm, and then heated at 120°C for five minutes to obtain a semi-cured film. The film was then exposed to ultraviolet rays at 500 mJ/cm² using a UV irradiation device (Unicure UVH-1500M available from USHIO Inc.) to obtain a degradable cross-linked product. No precipitate was formed on the coating film. The degradable cross-linked product was insoluble in ion-exchanged water, but when it was immersed in a 3% aqueous sodium hypochlorite solution, foaming and removal of the product from the substrate were observed.

### (Example 12)

An amount of 30 g of a bisphenol A epoxy resin (jER828 available from Mitsubishi Chemical Corporation), 0.12 g of tetramethylammonium chloride, and 28.5 g of ethylparaben were mixed in a 300 mL separable flask. The mixture was stirred at 100°C overnight and then brought to room temperature. To the resulting mixture were added 93 g of chloroform and 30 g of ion-exchanged water to perform a liquid separation process. The lower layer was returned to the flask and concentrated under reduced pressure at 75°C. Then, 42 g of methanol and 10.1 g of hydrazine monohydrate were added, and the mixture was stirred at 70°C for three hours. Thereafter, 20.2 g of hydrazine monohydrate was further added, and the mixture was further stirred overnight. The resulting mixture was concentrated using an evaporator to obtain 52 g of a compound of formula (A12).

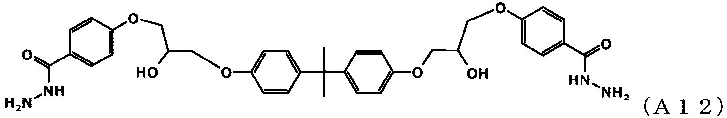

In a separately provided 100 mL round-bottom flask, 10 g of an allyl polyether having a hydroxyl group at one terminal and a molecular weight of 1650 (Sanycol H-0725 available from Sanyo Chemical Industries, Ltd.) and 2.7 g of triethylamine were dissolved in 33 g of acetonitrile, and 1.84 g of di(N-succinimidyl) carbonate was added to the solution and stirred at room temperature for one hour. Then, the solvent was removed using an evaporator, and 20 g of dimethylformamide, 2.7 g of triethylamine, and 2.15 g of the compound of formula (A12) were added to the residue, followed by further stirring overnight. Then, 200 g of ion-exchanged water was added to the reaction liquid, and the mixture was stirred and allowed to stand for one hour, after which the aqueous layer was removed by decantation. After adding 20 g of isopropanol to the remaining viscous liquid, the solvent was removed using an evaporator, and the residue was dried overnight in a vacuum dryer to obtain 6.8 g of a degradable compound having a structure of formula (A13). The degradable compound of formula (A13) was liquid at 50°C. 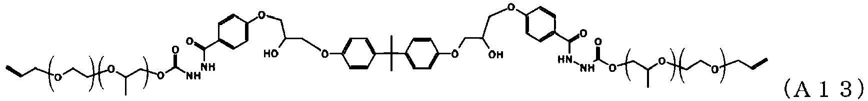 1H-NMR (DMSO, δ ppm) 1.04 (150H, d, CH₃), 1.58 (6H, s, CH₃), 3.21-3.69 (206H, m, OCH), 3.95 (4H, d, C=C-CH₂), 4.00-4.16 (10H, m, OCH), 4.76 (2H, br, OH), 5.12 (2H, dd, C=CH₂), 5.24 (2H, dd, C=CH₂), 5.82-5.92 (2H, m, CH=C), 6.85 (4H, d, benzene ring), 7.03 (4H, d, benzene ring), 7.10 (4H, d, benzene ring), 7.83 (4H, d, benzene ring), 9.00 (2H, br, NHNH), 10.11 (2H, br, NHNH)

Upon adding a small amount of a 20% aqueous sodium hypochlorite solution to the obtained degradable compound of formula (A13), foaming occurred. 1H-NMR analysis confirmed the generation of an allyl polyether as a degradation product.

The compound of formula (A13), pentaerythritol tetrakis(3-mercaptobutyrate), and 4-acryloylmorpholine were mixed at a weight ratio of 10:1:4. Then, 0.2 parts by weight of a photopolymerization initiator (Omnirad 907 available from IGM Resins), 0.2 parts by weight of a photopolymerization initiator (Omnirad TPO-N available from IGM Resins), and 1 part by weight of Pigment Blue 15:3 were added to the mixture to prepare a photocurable composition solution. The composition was applied onto a PET film substrate to give a cured film thickness of 10 µm, followed by exposure to ultraviolet rays at 200 mJ/cm² using a UV irradiation device (Unicure UVH-1500M available from USHIO Inc.) to obtain a degradable cross-linked product. No precipitate was formed on the coating film. The degradable cross-linked product was insoluble in ion-exchanged water, but when it was immersed in a solution prepared by 3-fold dilution of an aqueous solution containing sodium hypochlorite, a surfactant, and sodium hydroxide (Kitchen Haiter available from Kao Corporation) with tap water, foaming and removal of the product from the substrate were observed.

### (Example 13)

In a 20 mL round-bottom flask, 7.8 g of dehydrated acetonitrile, 0.7 g of triethylamine, and 0.28 g of 2-hydroxyethyl carbazate were mixed, and 0.36 g of methacrylic anhydride was added dropwise to the mixture while cooling with ice. After stirring at room temperature for two hours, the solvent was removed using an evaporator, and the residue was transferred to a 200 mL round-bottom flask. Then, 29 g of ethyl acetate, 30 g of butyl acrylate, 8.6 g of 2-ethylhexyl acrylate, and 2.98 g of diethylacrylamide were added to the residue, and they were mixed. The mixture was heated to 75°C, and 0.12 g of azobis(isobutyronitrile) was added in small portions, followed by stirring overnight to obtain 71 g of an ethyl acetate solution containing a compound of formula (A14). A 30 g portion of the ethyl acetate solution was transferred to a 50 mL round-bottom flask and concentrated using an evaporator to obtain 17 g of the compound of formula (A14). The average molecular weight was found to be 400,000 by GPC. 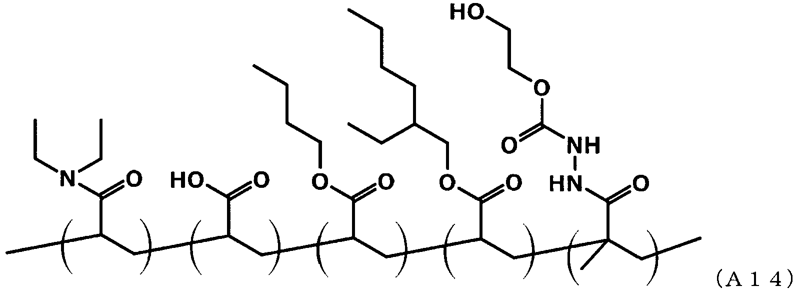 1H-NMR (DMSO, δ ppm) 0.83-0.93 (420H, m, CH₃), 1.02-1.13 (60H, m, CH₃), 1.25-1.41 (360H, m, OCH), 1.42-1.88 (490H, m, CH, CH₂, CH₃), 2.19-2.42 (130H, m, CH), 3.29-3.43 (40H, m, NCH₂), 3.57 (2H, dd, C=CH₂), 5.24 (2H, dd, C=CH₂), 5.82-5.92 (2H, br, HOCH₂), 3.99-4.43 (242H, m, O=COCH₂), 9.02 (1H, br, NH), 9.77 (1H, br, NH)

Upon adding a small amount of a 20% aqueous sodium hypochlorite solution to the obtained degradable compound of formula (A14), foaming occurred. 1H-NMR analysis confirmed the generation of ethylene glycol as a degradation product.

A thermosetting composition solution was prepared by mixing 30 g of an ethyl acetate solution containing 57% of the compound of formula (A14), 0.16 g of 1,3,5-tris(6-isocyanatohexyl)-1,3,5-triazinane-2,4,6-trione, and 3 mg of dioctyltin dilaurate. The composition was applied onto a PET film substrate to give a cured film thickness of 20 µm, and then dried and cured at 110°C for two minutes to obtain a degradable cross-linked product. No precipitate was formed on the coating film. The degradable cross-linked product exhibited tackiness and was able to adhere to alkali-free glass with a strength of 5 N/25 mm (in accordance with JIS-Z0237). It should be noted that the degradable cross-linked product was insoluble in a 50% aqueous isopropanol solution, but when it was immersed in a mixture solution of a 2% aqueous sodium hypochlorite solution and isopropanol (weight ratio 1:1), foaming occurred and the coating film was removed from the substrate.

### (Comparative Example 1)

An amount of 1.4 g of pyridine, 10.3 g of acetonitrile, and 0.86 g of allylacetohydrazide were mixed in a 30 mL two-necked flask. A solution of 0.82 g of sebacoyl chloride in 6.2 g of acetonitrile was added dropwise to the mixture at 5°C or lower, followed by stirring at room temperature for three hours to obtain a white solid. The white solid was washed with 30 g of acetonitrile and dried in a vacuum dryer at 40°C to obtain a degradable compound of formula (B1) in a yield of 95%. 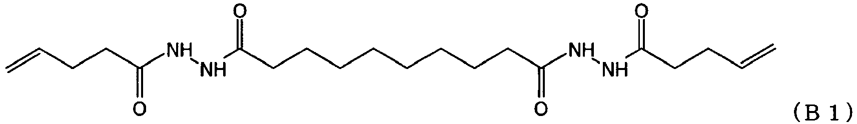 1H-NMR (DMSO, δ ppm) 1.25 (8H, S, C8H16), 1.50 (4H, t, C8H16), 2.09 (4H, t, C8H16), 2.17-2.18 (8H, m, C2H4), 4.96 (2H, d, CH=CH2), 5.05 (2H, d, CH=CH2), 5.76-5.87 (2H, m, CH=CH2), 9.66 (2H, S, NHNH), 9.69 (2H, S, NHNH)

The solvent solubility of the obtained degradable compound of formula (B1) was evaluated. Table 2 shows the results. Upon adding a 20% aqueous sodium hypochlorite solution to the powdery degradable compound of formula (B1), foaming and degradation of the compound were observed.

An amount of 0.3 g of the degradable compound of formula (B1), 0.1 g of poly(methylhydrosiloxane), and 4.0 mg of a platinum catalyst (trade name: CAT-PL-50T, available from Shin-Etsu Chemical Co., Ltd.) were added to 40 g of a solvent mixture of dimethyl sulfoxide and dimethylformamide (weight ratio 2:1) to prepare a crosslinking composition solution. The solution was applied onto a glass substrate to give a cured film thickness of 0.1 µm, and then dried and cured at 150°C for 10 minutes to obtain a degradable cross-linked product. A small amount of precipitate was observed on the dried coating film. The degradable cross-linked product was insoluble in water, but when it was immersed in a 10% aqueous sodium hypochlorite solution, foaming and removal of the product from the substrate were observed.

### (Comparative Example 2)

In a 100 mL round-bottom flask, 3.30 g of 1,12-bis(2,5-dioxy-1-pyrrolidinyl) 2,5,8,11-tetraoxadodecanedioate, 26 g of dimethylformamide, and 1.6 g of triethylamine were mixed. Then, 0.88 g of succinic acid dihydrazide was added, and the mixture was stirred at room temperature overnight. Next, 0.31 g of 4-hydroxybenzohydrazide was added, and the mixture was further stirred at room temperature for six hours. Then, 37 g of ethyl acetate was added to the reaction liquid, and the mixture was allowed to stand at -10°C overnight to form a precipitate. The organic solvent was removed by decantation, and the precipitate was washed twice with 35 g of ethyl acetate. Finally, the solvent was removed by evaporation to obtain a degradable compound having a structure of formula (B2) as a white solid in a yield of 79%. 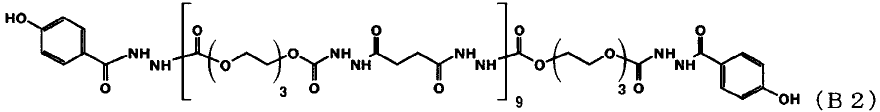 1H-NMR (DMSO, δ ppm) 2.34 (36H, br, CH₂CO), 3.54 (40H, br, CH₂O), 3.59 (40H, br, CH₂O), 4.10 (40H, br, CH₂OCO), 6.81 (4H, d, benzene ring), 7.72 (4H, d, benzene ring), 9.07 (20H, br, NHNH), 9.67 (20H, br, NHNH), 10.02 (2H, br, OH)

The solvent solubility of the obtained degradable compound of formula (B2) was evaluated. Table 2 shows the results. Upon adding a small amount of a 20% aqueous sodium hypochlorite solution to the powdery degradable compound of formula (B2), foaming occurred. 1H-NMR analysis confirmed the generation of succinic acid and 4-hydroxybenzoic acid as degradation products.

### (Solvent solubility evaluation)

An amount of 0.5 mL of the solvent indicated in Table 1 or 2 was added to 2 mg of the degradable compound of each of Examples 1 to 13 and Comparative Examples 1 and 2, and the mixture was stirred while the degree of dissolution was visually observed. When an undissolved portion remained after two-minute stirring at room temperature, the mixture was heated with stirring using a heat gun for two minutes and then visually observed again. The scoring was as follows: 3 points for those that completely dissolved at room temperature; 2 points for those in which an undissolved portion remained at room temperature but completely dissolved after heating; 1 point for those in which a slight amount of an undissolved portion remained after heating; and 0 points for those in which a large amount of an undissolved portion remained after heating. Tables 1 and 2 show the results.

**[Table 1]**

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Degradable compound | | Formula (A1) | Formula (A2) | Formula (A3) | Formula (A4) | Formula (A5) | Formula (A6) | Formula (A7) | Formula (A8) | Formula (A9) | Formula (A10) | Formula (A11) | Formula (A13) | Formula (A14) |
| Solvent type | Methanol | 3 | 3 | 3 | 3 | 3 | 3 | 1 | 3 | 3 | 3 | 3 | 3 | 1 |
| | Isopropanol | 2 | 3 | 3 | 3 | 2 | 2 | 1 | 0 | 3 | 1 | 1 | 2 | 2 |
| | Propylene glycol monomethyl ether | 3 | 3 | 3 | 3 | 2 | 2 | 0 | 1 | 3 | 2 | 3 | 3 | 3 |
| | Methyl isobutyl ketone | 2 | 3 | 3 | 3 | 3 | 3 | 0 | 0 | 3 | 1 | 1 | 1 | 3 |
| | Ethyl acetate | 3 | 3 | 3 | 3 | 3 | 3 | 1 | 1 | 3 | 2 | 1 | 1 | 3 |

**[Table 2]**

| | | Comparative Example 1 | Comparative Example 2 |
|---|---|---|---|
| Degradable compound | | Formula (B1) | Formula (B2) |
| Solvent type | Methanol | 0 | 1 |
| | Isopropanol | 0 | 0 |
| | Propylene glycol monomethyl ether | 0 | 0 |
| | Methyl isobutyl ketone | 0 | 0 |
| | Ethyl acetate | 0 | 0 |

The degradable compounds of Comparative Examples 1 and 2 were poorly soluble in all the solvents. The degradable compounds of Examples 1 to 13 exhibited high solubility in a plurality of the solvents.

## Claims

1. A degradable compound, represented by the following formula (1): 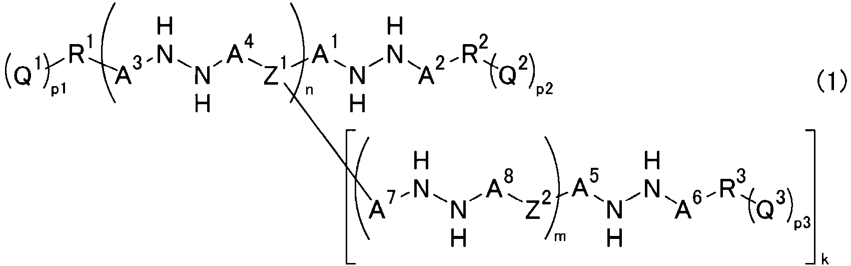 wherein
- n ≥ 0, k ≥ 0, m ≥ 0, p1 ≥ 1, p2 ≥ 1, and p3 ≥ 1;
- R¹, R², and R³ each independently represent a hydrocarbon group, a group containing a siloxane structure, or a single bond;
- Z¹ and Z² each independently represent a hydrocarbon group or a group containing a siloxane structure;
- at least one selected from the group consisting of R¹, R², and R³, at least one selected from the group consisting of Z¹ and Z², or both, has a molecular weight of 200 or more;
- Q¹, Q², and Q³ each independently represent a reactive functional group, a hydrogen atom, or a halogen atom; and
- A¹ to A⁸ each independently represent a carbonyl group or a single bond, at least one of A¹ and A² is a carbonyl group, at least one of A³ and A⁴ is a carbonyl group, at least one of A⁵ and A⁶ is a carbonyl group, and at least one of A⁷ and A⁸ is a carbonyl group.

2. The degradable compound according to claim 1,
wherein the degradable compound is degradable upon contact with an oxidizing agent.

3. The degradable compound according to claim 1 or 2,
wherein Z¹ or Z² has a molecular weight of 700 or more.

4. The degradable compound according to any one of claims 1 to 3,
wherein n ≥ 1 and k ≥ 1.

5. The degradable compound according to any one of claims 1 to 4,
wherein n ≥ 1 and k ≥ 1, and Z¹ has a molecular weight of 200 or more.

6. A method for degrading a degradable compound, comprising
bringing the degradable compound according to any one of claims 1 to 5 into contact with an aqueous solution containing an oxidizing agent at 100°C or lower.

7. A degradable cross-linking agent, comprising the degradable compound according to any one of claims 1 to 5,
wherein Q¹, Q², and Q³ are each independently at least one reactive functional group selected from the group consisting of a hydroxyl group, an amino group, a thiol group, a hydrazide group, a carboxylic acid, an acid anhydride group, a vinyl group, an allyl group, an acrylate group, a methacrylate group, a crotonate group, an isoprenyl group, an acrylamide group, a methacrylamide group, a crotonamide group, an epoxy group, an oxetane group, an oxazoline group, an isocyanate group, a carbodiimide group, a methylol group, a silanol group, a hydroxysilyl group, and an alkoxysilyl group.

8. The degradable cross-linking agent according to claim 7,
wherein Q¹ and Q² are the same reactive functional group, or Q¹ and Q³ are the same reactive functional group.

9. The degradable cross-linking agent according to claim 7 or 8,
wherein p1 = 1, p2 = 1, or p3 = 1.

10. The degradable cross-linking agent according to any one of claims 7 to 9,
wherein the degradable cross-linking agent is liquid at 30°C to 60°C.

11. A composition, comprising:
the degradable cross-linking agent according to any one of claims 7 to 10; and
at least one selected from the group consisting of a curable resin, a polymerization initiator, and a solvent.

12. A degradable cross-linked product, formed from the composition according to claim 11.

13. The degradable cross-linked product according to claim 12,
wherein the degradable cross-linked product is degradable upon contact with an oxidizing agent.

14. A method for degrading a degradable cross-linked product, comprising
bringing the degradable cross-linked product according to claim 12 or 13 into contact with an aqueous solution containing an oxidizing agent at 100°C or lower.
